# NOUVEAU FASCICULE DE BREVET EUROPEEN

(11) **EP 0 429 760 B2**
(45) Date de publication et mention de la décision concernant l'opposition: **01.12.1999**
(45) Mention de la délivrance du brevet: 23.12.1992
(21) Numéro de dépôt: 90115362.7
(22) Date de dépôt: 10.08.1990
(51) Int. Cl.: A23L 1/227, A23L 1/23, A23J 3/34

(54) **Procédé de préparation d'un agent aromatisant**
Verfahren zur Herstellung eines Gewürzmittels
Process for preparing a flavouring agent

(30) Priorité: 27.11.1989 CH 423489
(43) Date de publication de la demande: 05.06.1991
(73) Titulaire: SOCIETE DES PRODUITS NESTLE S.A., 1800 Vevey (CH)
(72) Inventeur: Ho Dac, Thang, CH-1052 Le Mont s/Lausanne (CH); Wood, Robert Dustan, CH-1052 Le Mont s/Lausanne (CH); Woupeyi, Alfred, CH-1400 Yverdon (CH)

(56) Documents cités:
- EP-A- 0 087 247
- EP-A- 0 148 600
- EP-A- 0 191 513
- EP-A- 0 223 560
- DE-B- 3 318 130
- GB-A- 1 338 936
- JP-A- 5 167 757
- US-A- 3 475 183
- US-A- 3 852 479
- US-A- 4 382 964
- J. Agri Chem. Soc. JP 43(5), 186-91 (1969)(FSTA-CAB Abstract)
- Chemical Abstracts 101 (19):166109w et Chemical Abstracts 101 (17):146654s
- Nippon Shokuhin Kogyo Gakkaishi 29(6), 366-71 (1982) et 29(7), 428-34
- Appl. Microbiol. Biotechnol. 30, 604-608 (1989)
- Advances in Food Research 30, 222-227 (1986)

## Description

La présente invention a pour objet un procédé de préparation d'un agent aromatisant par hydrolyse enzymatique de protéines.

Des matières riches en protéines, telles que des tourteaux d'oléagineuses, des graines de légumineuses, du gluten de céréales ou des protéines lactiques, par exemple, sont couramment utilisées, sous forme hydrolysée, comme matière première entrant dans la composition de potages, sauces et condiments déshydratés ou liquides.

Dans ce contexte, il est courant de soumettre un tourteau d'arachide ou de soya, par exemple, à une hydrolyse à l'acide chlorhydrique concentré, de neutraliser avec de l'hydroxyde de sodium, d'écarter les insolubles, de soumettre ou non l'hydrolysat à des opérations de filtrage, décoloration, concentration et/ou séchage, et de l'utiliser ensuite comme agent aromatisant, tel quel, ou après l'avoir fait réagir avec des sucres réducteurs, par exemple.

Un tel procédé de préparation d'un agent aromatisant par hydrolyse acide de protéines présente entre autres l'inconvénient de dégrader les acides aminés produits durant l'hydrolyse.

Si, pour cette raison, on préfère recourir a l'hydrolyse enzymatique d'une matière riche en protéines, on se heurte au problème connu de l'amertume de l'hydrolysat provoquée par des peptides amers produits durant l'hydrolyse.

Divers procédés ont été proposés pour éviter ou éliminer cette amertume, notamment en réalisant l'hydrolyse enzymatique dans des conditions telles que la production de peptides amers soit réduite, en extrayant les peptides amers de l'hydrolysat, ou en dégradant les peptides amers.

EP-A-0 223560, par exemple, décrit un procédé dans lequel on hydrolyse notamment de la caséine ou un isolat de protéines de soya avec une protéinase, puis on élimine l'amertume du produit obtenu en l'hydrolysant encore avec une aminopeptidase dérivée d'une souche de Streptococcus lactis.

La présente invention a pour but de proposer un procédé qui permette de préparer un agent aromatisant par hydrolyse enzymatique d'une matière riche en protéines courantes, sans devoir recourir à des exopeptidases purifiées pour le désamériser, tout eu lui conférant des qualités organoleptiques remarquables.

A cet effet, dans le procédé de préparation d'un agent aromatisant selon la présente invention,
- on prépare une suspension aqueuse d'une matière riche en protéines choisie dans un groupe formé par des graines subdivisées et dégraissées d'oléagineuses ou de légumineuses, le gluten de céréales et les proteines lactiques,
- on solubilise les protéines par hydrolyse de la suspension à pH 6,0-11,0 à l'aide d'une protéase, durant 2-8 h à 50-75°C,
- on traite thermiquement la suspension à pH 4,9-5,9 à 90-140°C durant 10 s à 30 min,
- on refroidit la suspension, on lui ajoute du koji et du chlorure de sodium, et
- on la laisse mûrir sous l'effet des enzymes que ledit koji contient.

Ce procédé permet effectivement de préparer à partir de matières riches en protéines courantes telles qu'une farine de soya dégraissée ou de la caséine, par exemple, un agent aromatisant présentant des qualités organoleptiques remarquables, à savoir un goût agréable et relativement neutre, dépourvu de toute amertume, dans une forme d'exécution prévoyant une maturation relativement brève, ou un goût plus corsé, dépourvu aussi de toute amertume, dans une forme d'exécution prévoyant une maturation plus longue.

Dans le présent exposé, le terme "koji" désigne le produit de la fermentation, avec une culture de koji, d'un mélange d'une source de protéines et d'une source d'hydrates de carbone, notamment d'un mélange d'une légumineuse ou d'une oléagineuse cuite et d'une céréale cuite ou rôtie, par exemple d'un mélange de soya ou de haricot cuit et de blé ou de riz cuit ou rôti.

L'expression culture de koji signifie une culture de spores de koji telle qu'on peut s'en procurer dans le commerce, notamment au Japon ou en Chine, qui comprend en particulier des spores d'Aspergillus oryzae ou d'Aspergillus soyae.

De même, dans la suite du présent exposé, on utilise l'expression "culture de levure halophile" dans le sens d'une culture de levures productrices de substances aromatiques et d'alcool, telle que Saccharomyces rouxii par exemple, utilisée pour la fermentation traditionnelle d'un moromi obtenu par mélange d'un koji et d'une saumure, dans le cadre d'une préparation traditionnelle d'une sauce de soya.

Enfin, pour caractériser l'activité enzymatique de ladite protéase dans le présent exposé, on utilise l'unité Anson (UA) telle que définie par la méthode analytique d'Anson (J.General Physiology 22, 1939, 79-89) modifiée par la firme Novo Industri A/S.

Pour mettre en oeuvre le présent procédé, on choisit donc ladite matière riche en protéines dans un groupe formé par des graines subdivisées et dégraissées d'oléagineuses ou de légumineuses, notamment les farines dégraissées ou les tourteaux de soya ou d'arachide, le gluten de céréales, notamment le gluten de blé, de riz ou de maîs, et les protéines lactiques, notamment la caséine ou les protéines de lactosérum, par exemple. On peut également utiliser des isolats ou des concentrats de protéines végétales ou animales, par exemple.

On prépare de préférence une suspension aqueuse à 10-40% de matière sèche d'une telle matière.

On peut ajuster le pH de cette suspension à une valeur comprise entre 6,0 et 11,0, de préférence 8,0-10,0, par addition d'hydroxyde de sodium, par exemple.

On peut alors ajouter à la suspension une protéase présentant une activité de 0,2-12 UA pour 100 g de matière sèche de la suspension, parexemple. De préférence, on choisit cette protéase dans un groupe formé par les protéases neutres ou alcalines d'origine bactérienne (produites par exemple par B.licheniformis ou B.subtilis) ou fongique (produites par exemple par A.oryzae ou A.soyae). De telles enzymes sont commercialisées sous le nom de neutrase ou alcalase par Novo Industri A/S, sous la désignation MKC-HT Proteolytic 200 ou MKC-protéase-L330 par Miles Kali-Chemie GmbH & Co KG, ou sous le nom de corolase N, PN ou 7089 par Röhm GmbH, par exemple.

On hydrolyse la suspension pendant 2-8h, de préférence 3-6h, à 50-75°C, de préférence 61-68°C.

On ajuste alors le pH à 4,9-5,9, par addition d'acide chlorhydrique, lactique, citrique, phosphorique ou acétique, par exemple. L'étape de traitement thermique à ce pH joue un rôle important en rapport avec la viscosité de ladite suspension et la solubilité de l'agent aromatisant obtenu par une forme d'exécution préférée du procédé, dans laquelle on presse la suspension après sa maturation, on pasteurise le jus obtenu et ou le clarifie, Si l'on ajuste le pH à une valeur supérieure à 6,5, l'agent aromatisant présente une trop grande turbidité lorsou'on le dilue dans l'eau. Si l'on ajuste le pH à une valeur inférieure à 4,6, ladite suspension traitée thermiquement présente une viscosité qui la rend difficilement pompable.

On peut réaliser le traitement thermique en cuve à double manteau, dans un échangeur de chaleur, ou par injection de vapeur, par exemple. Selon le mode de chauffage choisi, la température du traitement est comprise entre environ 90 et 140°C et la durée du traitement est comprise entre environ 10 s et 30 min, les durées les plus brèves correspondant aux températures les plus élevées et inversément.

On refroidit ensuite la suspension traitée thermiquement, jusqu'à une température de 20-40°C, par exemple. Si l'on réalise le traitement thermique par injection de vapeur, on peut réaliser ce refroidissement par détente, ce qui confère un goût plus neutre à l'agent aromatisant finalement obtenu.

On ajoute alors le koji à la suspension refroidie, à raison de 2-50% en poids de koji sur matière sèche de la suspension, le koji pouvant présenter lui-même une teneur en matière sèche de environ 60-75%, par exemple. Ce koji peut avoir été préparé, par exemple, en mélangeant une oléagineuse ou une légumineuse cuite, notamment du soya ou un haricot cuit, avec une céréale cuite ou rôtie, notamment du riz ou du blé concassé rôti, à raison de 50-90 parties en poids de matière sèche de légumineuse ou d'oléagineuse dégraissée ou non dégraissée et 10-50 parties en poids de céréale, en laissant le mélange, refroidir à 20 -40°C, en l'inoculant avec une culture de koji ou avec une culture pure de spores d'A.oryzae ou d'A.soyae, à raison d'une partie en poids de culture ou poudre de spores pour mille à dix mille parties en poids de mélange, et en laissant fermenter le mélange durant 30-50 h à 20-40°C sur des claies traditionnelles, sur un plateau ou dans un appareil du commerce spécialement conçu à cet effet, tout en brassant par intermittence et en aérant.

Après avoir ajouté le chlorure de sodium à la suspension, en quantité telle que la suspension présente une teneur en chlorure de sodium de environ 10-17% en poids, par exemple, on laisse mûrir la suspension sous l'effet des enzymes que le koji contient, à savoir les enzymes qui ont été produites par la culture de koji au cours de la fermentation d'un mélange de légumineuse ou d'oléagineuse cuite et de céréale cuite ou rôtie, par exemple.

Dans une forme d'exécution du présent procédé, on laisse mûrir ainsi la suspension durant deux à vingt jours et l'on obtient un agent aromatisant présentant un goût agréable et relativement neutre.

Dans une autre forme d'exécution du présent procédé, après avoir ajouté le koji et le chlorure de sodium à la suspension, on l'inocule encore avec une culture de levure halophile et on la laisse mûrir durant une à huit semaines à 20-40°C. On obtient ainsi un agent aromatisant présentant un goût plus corsé.

Dans cette forme d'exécution particulière du présent procédé, on inocule de préférence la suspension avec 1-5% en volume d'une culture de Saccharomyces rouxii et/ou de Torulopsis etchelsii contenant environ 10⁷-10⁸ cellules de l'un ou l'autre ou d'un mélange de ces microorganismes par ml.

Après l'étape de la maturation, on peut extraire de là suspension un jus limpide que l'on peut utiliser comme agent aromatisant tel quel ou après lui avoir fait subir divers traitements complémentaires. On peut également concentrer ce jus, le déshydrater et le réduire en poudre.

Pour extraire ce jus limpide, on peut presser la suspension après sa maturation, écarter les insolubles, pasteuriser le jus obtenu et le clarifier. On peut en particulier presser la suspension avec une presse capable d'exercer une pression adéquate d'environ 10-100 bar, telle qu'une presse à vis ou une presse hydraulique, par exemple. On peut pasteuriser le jus obtenu à une température de 75-140°C durant 5 s-30 min, et on peut le clarifier en le faisant passer au travers d'un papier filtre ou d'une membrane synthétique, par exemple.

On peut ensuite concentrer ce jus clarifié jusqu'à une teneur en matière sèche de environ 60-85% en poids, par évaporation à une température de environ 40-65°C sous une pression de environ 10-100 mbar durant environ 1-8 h, par exemple.

On peut également déshydrater ce jus concentré jusqu'à une teneur en matière sèche de environ 95-99% en poids, par séchage à environ 60-80°C sous une pression de environ 10-100 mbar durant environ 5-10 h, par exemple. On peut enfin broyer ce jus déshydraté, dans un moulin à marteau par exemple, pour le réduire en poudre.

L'agent aromatisant obtenu par le présent procédé, sous forme de suspension aqueuse maturée, de liquide limpide, de concentré ou de poudre, peut être utilisé soit tel quel pour aromatiser des mets divers, soit comme ingrédient de base entrant dans la composition de produits alimentaires ou utilisé pour la préparation de sauces et potages liquides, semi-liquides ou déshydratés, par exemple.

Les exemples ci-après sont donnés à titre d'illustration du procédé selon la présente invention. Les pourcentages et parties y sont indiqués en poids sauf précision contraire.

### Exemple 1

On prépare une suspension aqueuse à 23% de matière sèche d'une farine de soya dégraissée. On ajuste le pH de la suspension à 10,0 par addition de NaOH. On ajoute à la suspension 0,6% sur matière sèche de la suspension d'une protéase alcaline bactérienne (produite par B.licheniformis) présentant une activité de 2,4 UA par g d'enzyme. On hydrolyse la suspension durant 3h à 68°C dans une cuve à double manteau, sous agitation constante.

On ajuste le pH de la suspension hydrolysée à 5,4 par addition d'acide citrique. On soumet la suspension à un traitement thermique par injection de vapeur à 140°C durant 10 s. On refroidit la suspension ainsi traitée à 30-35°C par détente à pression atmosphérique.

Par ailleurs, pour préparer un koji, on mélange une partie de tourteau de soya avec une partie d'eau, on le cuit en autoclave à 128°C durant 15 min et on le refroidit à 30-35°C. On mélange le soya cuit avec du blé rôti concassé, à raison de 70% de matière sèche de soya pour 30% de matière sèche de blé rôti. On inocule ce mélange avec une culture de koji, à raison d'une partie de culture ou poudre de spores pour cinq mille parties de mélange: On laisse fermenter le mélange sur des claies durant 44 h tout en le brassant deux fois au total et en l'aérant en continu.

On ajoute ce koji à ladite suspension refroidie à 30-35°C, à raison de 20% de koji sur matière sèche de la suspension. On ajoute du chlorure de sodium en quantité telle que la suspension présente une teneur en chlorure de sodium de 14%. On laisse mûrir la suspension durant 15 j à cette température.

On presse la suspension à l'aide d'une presse hydraulique. On écarte les insolubles par sédimantation. On pasteurise le jus obtenu à 90°C durant 30 min. On le clarifie en le faisant passer au travers d'un papier filtre.

On obtient un agent aromatisant liquide qui présente une teneur en matière sèche de environ 28%, une bonne limpidité, une bonne fluidité, et un goût agréable, relativement neutre et dépourvu de toute amertume.

### Example 2

On procède de la manière décrite à l'exemple 1 jusqu'à l'obtention de la suspension refroidie additionnée de koji et de chlorure de sodium.

On ajuste le pH de la suspension à 5,4 par addition d'acide citrique.

On inocule la suspension avec 2% en volume d'une culture mixte de Saccharomyces rouxii et de Torulopsis etchelsii contenant environ 5.10⁷ cellules de chacun de ces microorganismes par ml. On laisse mûrir à 33°C durant quatre semaines.

Après maturation, on presse la suspension à l'aide d'une presse hydraulique. On recueille le jus, on le laisse reposer durant 3 j, et on écarte les insolubles qui ont sédimenté. On pasteurise le jus à 95°C durant 15 min et on le clarifie en le faisant passer au travers d'un papier filtre.

On obtient un agent aromatisant liquide qui présente une teneur en matière sèche de environ 28-30%, une limpidité parfaite, une bonne fluidité et un goût plus corsé dépourvu de toute amertume.

### Exemple 3

On procéde de la manière décrite à l'exemple 2, à l'exception du fait que l'on prépare une suspension aqueuse d'un mélange à 60% de farine de soya dégraissée et 40% de caséine ou de protéines de lactosérum.

On obtient ainsi un agent aromatisant liquide de qualités comparables à celles de l'agent aromatisant obtenu à l'exemple 2.

### Exemple 4

On concentre le jus clarifié obtenu à l'exemple 2 à une température de environ 60°C sous une pression de 20 mbar jusqu'à une teneur en matière sèche de environ 75%.

On déshydrate ensuite ce jus concentré jusqu'à une teneur en matière sèche de 98% dans un séchoir sous pression réduite où il est soumis à une température de environ 70°C sous une pression de 20 mbar.

On broye ce jus déshydraté dans un moulin à marteau muni d'une grille à mailles carrées d'un mm de côté.

On obtient un agent aromatisant en poudre que l'on peut utiliser comme condiment ou reconstituer en le dispersant dans de l'eau à raison d'une partie de poudre pour trois parties d'eau, par exemple. L'agent aromatisant ainsi reconstitué présente des qualités comparables à celles du produit obtenu à l'exemple 1.

Cet agent aromatisant liquide, concentré ou en poudre se prête également bien tel quel à une utlisation à titre d'ingrédient entrant dans la composition de produits alimentaires. Il peut aussi être utilisé comme matière première riche en acides aminés libres, susceptibles de réagir avec des sucres réducteurs, pour confectionner des bases pour la préparation de sauces ou potages.

## Revendications

1. Procédé de préparation d'un agent aromatisant, dans lequel
- on prépare une suspension aqueuse d'une matière riche en protéines choisie dans un groupe formé par des graines subdivisées et dégraissées d'oléagineuses ou de légumineuses, le gluten de céréales et les protéines lactiques,
- on solubilise les protéines par hydrolyse de la suspension à pH 6,0-11,0 à l'aide d'une protésse, durant 2-8 h à 50-75°C,
- on traite thermiquement la suspension à pH 4,9-5,9 à 90-140°C durant 10 s à 30 min,
- on refroidit la suspension, on lui ajoute du koji et du chlorure de sodium, et
- on la laisse mûrir sous l'effet des enzymes que ledit koji contient.

2. Procédé selon la revendication 1, dans lequel on prépare une suspension aqueuse à 10-40% de matière sèche d'une matière riche en protéines choisie dans le groupe formé par les farines dégraissées ou les tourteaux de soya ou d'arachide, le gluten de blé, de riz ou de maïs, et la caséine ou les protéines de lactosérum.

3. Procédé selon la revendication 1, caractérisé par le fait que, pour solubiliser les protéines, on ajoute à la suspension une protéase présentant une activité de 0,2 -12 unités Anson pour 100 g de matière sèche de la suspension.

4. Procédé selon la revendication 1, caractérisé par le fait que l'on choisit la protéase dans le groupe formé par les protéases neutres ou alcalines, d'origine bactérienne ou fongique.

5. Procédé selon la revendication 1, caractérisé par le fait que, après avoir refroidi la suspension traitée thermiquement, on ajoute le koji à la suspension à raison de 2-50 % en poids de koji sur matière sèche de la suspension, on ajoute le chlorure de sodium à la suspension de manière qu'elle présente une teneur en chlorure de sodium de 10-17% en poids, et on la laisse mûrir durant 2-20 jours à 20-40°C.

6. Procédé selon la revendication 1, caractérisé par le fait que, après avoir refroidi la suspension traitée thermiquement, on ajoute le koji à la suspension à raison de 2-50 % en poids de koji sur matière sèche de la suspension, on ajoute le chlorure de sodium à la suspension de manière qu'elle présente une teneur en chlorure de sodium de 10-17% en poids, on l'inocule avec une culture de levure halophile, et on la laisse mûrir durant 1-8 semaines, à 20-40°C.

7. Procédé selon la revendication 6, caractérisé par le fait que l'on ajuste le pH de la suspension à 4,9 - 5,9 et l'on inocule la suspension avec 1-5% en volume d'une culture de Saccharomyces rouxii et/ou de Torulopsis etchelsii contenant 10⁷ - 10⁸ cellules de l'un ou l'autre ou d'un mélange de ces microorganismes par ml.

8. Procédé selon la revendication 1, caractérisé par le fait que l'on presse la suspension après sa maturation, on pasteurise le jus obtenu et on le clarifie.

9. Procédé selon la revendication 8, caractérisé par le fait que l'on concentre le jus clarifié jusqu'à une teneur en matière sèche de 60-85% en poids, on le déshydrate jusqu'à une teneur en matière sèche de 95-99% en poids et on le réduit en poudre.

## Claims

1. A process for the production of a flavouring agent, in which
- an aqueous suspension of a protein-rich material is prepared from a group formed by subdivided, defatted oilseeds or seeds of leguminous plants, gluten of cereals and lactic proteins;
- the proteins are solubilized by hydrolysis of the suspension with a protease at pH 6.0 to 11.0, for 2 - 8 h at 50-75°C;
- the suspension is heat-treated at pH 4.9 to 5.9 at 90-140°C for 10 s to 30 min;
- the suspension is cooled, koji and sodium chloride are added to it; and
- it is allowed to ripen under the effects of the enzymes which the said koji contains.

2. A process according to claim 1, in which an aqueous suspension having a dry matter content of 10 to 40% is prepared from a protein-rich material selected from the group consisting of defatted soybean or peanut flour, soybean or peanut cake, wheat, rice or corn gluten and casein or lactoserum proteins.

3. A process according to claim 1, characterised in that, to solubilise the proteins, a protease having an activity of 0.2 to 12 Anson units to 100 g dry matter of the suspension is added to the suspension.

4. A process according to claim 1, characterised in that the protease is selected from the group consisting of neutral or alkaline proteases of bacterial or fungal origin.

5. A process according to claim 1, characterised in that, after the heat-treated suspension has been cooled, the koji is added to the suspension in a quantity of 2 to 50 wt. % koji, based on dry matter of the suspension, the sodium chloride is added to the suspension so that it has a sodium chloride content of 10 to 17 wt. % and the suspension is left to ripen for 2 to 20 days at 20 to 40°C.

6. A process according to claim 1, characterised in that, after the heat-treated suspension has been cooled, the koji is added to the suspension in a quantity of 2 to 50 wt. % koji, based on dry matter of the suspension, the sodium chloride is added to the suspension so that it has a sodium chloride content of 10 to 17 wt. %, the suspension is inoculated with a culture of halophilic yeast and is then left to ripen for 1 to 8 weeks at 20 to 40°C.

7. A process according to claim 6, characterised in that the pH of the suspension is adjusted to 4.9 - 5.9 and the suspension is inoculated with 1 to 5% by volume of a culture of Saccharomyces rouxii and/or Torulopsis etchelsii containing 10⁷ to 10⁸ cells of one or the other microorganism or of a mixture of these microorganisms per ml.

8. A process according to claim 1, characterised in that the suspension is pressed after ripening and the juice obtained is pasteurised and then clarified.

9. A process according to claim 8, characterised in that the clarified juice is concentrated to a dry matter content of 60 to 85 wt. %, dehydrated to a dry matter content of 95 to 99 wt. %, and then reduced to powder.

## Patentansprüche

1. Verfahren zur Herstellung eines Würzmittels, bei welchem man:
- eine wäßrige Suspension eines proteinreichen Materials herstellt, welches proteinreiche Material aus einer Gruppe ausgewählt ist, die aus zerkleinerten und entfetteten Ölfrüchten oder Hülsenfrüchten, Getreidegluten und Milchproteinen besteht;
- die Proteine durch Hydrolyse der Suspension bei einem pH-Wert von 6,0 bis 11,0 mit Hilfe einer Protease während 2 bis 8 Stunden bei 50°C bis 75°C solubilisiert;
- die Suspension bei einem pH-Wert von 4,9 bis 5,9 während 10 Sekunden bis 30 Minuten einer Wärmebehandlung bei 90°C bis 140°C unterwirft;
- die Suspension abkühlt, zu dieser Koji und Natriumchlorid zusetzt; und
- diese durch Wirkung der Enzyme des genannten Kojigehaltes reifen läßt.

2. Verfahren nach Anspruch 1, bei welchem man eine wäßrige Suspension mit einem Gehalt von 10 bis 40%, bezogen auf die Trockensubstanz, an einem proteinreichen Material herstellt, welches proteinreiche Material aus einer Gruppe ausgewählt ist, die aus entfetteten Soja- oder Erdnußmehlen oder -preßkuchen, Weizen-, Reis- oder Maisgluten, Casein oder den Proteinen des Milchserums besteht.

3. Verfahren nach Anspruch 1, dadurch gekennzeichnet, daß man zu der Suspension zum Solubilisieren der Proteine eine Protease zusetzt, welche eine Aktivität von 0,2 bis 12 Anson-Einheiten je 100 g Trockensubstanz der Suspension aufweist.

4. Verfahren nach Anspruch 1, dadurch gekennzeichnet, daß man die Protease aus einer Gruppe auswählt, welche aus neutralen oder alkalischen Proteasen, welche bakteriellen Ursprungs sind oder aus Pilzen stammen, besteht.

5. Verfahren nach Anspruch 1, dadurch gekennzeichnet, daß man nach der Abkühlung der der Wärmebehandlung unterworfenen Suspension Koji in einer Menge von 2 Gew.-% bis 50 Gew.-% Koji, bezogen auf die Trockensubstanz der Suspension, zu der Suspension zugibt, zu der Suspension Natriumchlorid in einer solchen Menge zusetzt, daß die Suspension einen Gehalt an Natriumchlorid von 10 Gew.-% bis 17 Gew.-% aufweist, und daß man die Suspension während 2 bis 20 Tagen bei 20°C bis 40°C reifen läßt.

6. Verfahren nach Anspruch 1, dadurch gekennzeichnet, daß man nach der Abkählung der der Wärmebehandlung unterworfenen Suspension Koji in einer Menge von 2 Gew.-% bis 50 Gew.-% Koji, bezogen auf die Trockensubstanz der Suspension, zu der Suspension zugibt, zu der Suspension Natriumchlorid in einer solchen Menge zusetzt, daß die Suspension einen Gehalt an Natriumchlorid von 10 Gew.-% bis 17 Gew.-% aufweist, daß man die Suspension mit einer halophilen Hefekultur beimpft, und daß man die Suspension während 1 bis 8 Wochen bei 20°C bis 40°C reifen läßt.

7. Verfahren nach Anspruch 6, dadurch gekennzeichnet, daß man den pH-Wert der Suspension auf 4,9 bis 5,9 einstellt, und daß man die Suspension mit 1 bis 5 Vol.-% einer Kultur von Saccharomyces rouxii und/oder Torulopsis etchelsii mit einem Gehalt von 10⁷ bis 10⁸ Zellen des einen oder anderen dieser Mikroorganismen oder eines Gemisches dieser Mikroorganismen, je ml, beimpft.

8. Verfahren nach Anspruch 1, dadurch gekennzeichnet, daß man die Suspension nach deren Reifung preßt, den erhaltenen Saft pasteurisiert und denselben klärt.

9. Verfahren nach Anspruch 8, dadurch gekennzeichnet, daß man den geklärten Saft bis auf einen Gehalt an Trockensubstanz von 60 Gew.-% bis 85 Gew.-% konzentriert, diesen Saft bis auf einen Gehalt an Trockensubstanz von 95 Gew.-% bis 99 Gew.-% dehydratisiert und zu einem Pulver zerkleinert.
